# EUROPÄISCHE PATENTANMELDUNG

(11) **EP 3 144 821 A1**
(43) Veröffentlichungstag der Anmeldung: **22.03.2017**
(21) Anmeldenummer: 16189460.5
(22) Anmeldetag: 19.09.2016
(51) Int. Cl.: G06F 17/24, G06F 17/22

(54) **VERFAHREN ZUM ERZEUGEN VON ELEKTRONISCHEN DOKUMENTEN**

(30) Priorität: 18.09.2015 DE 102015115797
(71) Anmelder: Sax, Frank, 76199 Karisruhe (DE)
(72) Erfinder: Sax, Frank, 76199 Karisruhe (DE)
(74) Vertreter: 2s | ip Schramm Schneider Patentanwälte Rechtsanwälte

(57) **Zusammenfassung**

Bereit gestellt wird ein Computer-implementiertes Verfahren zum Erzeugen eines elektronischen Dokuments in einem vorbestimmten Zielformat, wobei eine Grundstruktur bereitgestellt wird, in die Inhalte des zu erzeugenden elektronischen Dokuments einzufügen sind. Zum Erzeugen des Dokuments werden Eingangselemente bereitgestellt, die Inhalte umfassen, die in die Grundstruktur einzufügen sind. Ferner werden Bausteine bereitgestellt, zumindest eine Zeichenkette in dem Zielformat umfassen. Die Eingangselemente und die Bausteine werden einem Wandler zugeführt, wobei der Wandler für jedes Eingangselement zumindest einen Bausteinen auswählt und aus den Bausteinen und den Eingangselementen Datensegmente erzeugt, die von einem Erzeuger an vorbestimmten Stellen in die Grundstruktur einfügt werden, der als Ergebnis hiervon das elektronische Dokument bereitstellt. Bereit gestellt wird des Weiteren ein Verfahren zum Extrahieren von Inhalten aus einem elektronischen Dokument sowie ein Verfahren zum Wechseln eines Dokumentenformats von einem ersten Format in ein zweites Format.

## Beschreibung

### Gebiet der Erfindung

Die Erfindung betrifft ein Verfahren zum Erzeugen eines elektronischen Dokuments in einem vorbestimmten Zielformat, ein Verfahren zum Extrahieren von Inhalten aus einem elektronischen Dokument, insbesondere aus einem erfindungsgemäß erzeugten elektronischen Dokument, sowie ein Verfahren zum Erzeugen eines elektronischen Dokuments in einem vorbestimmten Zielformat aus einem elektronischen Dokument in einem vorbestimmten Ausgangsformat (Formatwechsel).

### Hintergrund der Erfindung

Im gewerblichen Umfeld (aber auch im privaten Umfeld) wird bekanntermaßen eine Vielzahl von Dokumenten erzeugt bzw. erstellt. Lediglich beispielhaft erwähnt seien Textdokumente, Formulare, Präsentationen und/oder Tabellen. Unter Dokumente werden nachfolgend elektronische Dokumente verstanden. Die erzeugten Dokumente können problemlos archiviert werden. Beispielsweise können die erzeugten Dokumente in ein Archivformat konvertiert werden.

Problematisch ist allerdings Weiterbearbeitung der erstellten elektronischen Dokumente. Hierzu muss das weiterzubearbeitende Dokument in einem editierbaren Format vorliegen. Eine problemlose und fehlerfreie Weiterverarbeitung ist allerdings nur dann gewährleistet, wenn das elektronische Dokument mit dem gleichen Programm weiterverarbeitet wird mit dem es auch erzeugt wurde. Wird ein Dokument hingegen mit einem anderen Programm oder mit einer anderen Version eines Programms weiterverarbeitet, kommt es regelmäßig vor, dass Dokumentinformationen (z.B. Formatierungen und im schlimmsten Fall sogar Texte) fehlerhaft oder gar nicht wiedergegeben werden. Bei einem Dokumentenaustausch muss daher das Dokument in der Regel nachbearbeitet werden. Ein Dokumentenaustausch zwischen Unternehmen oder Organisationen, die unterschiedliche Programme für die Bearbeitung von Dokumenten verwenden, ist daher nahezu nicht reibungslos möglich. Entweder müssen die Unternehmen mehrere unterschiedliche Programme einsetzen, was zu vermeidbaren Kosten führt, oder sie müssen sich auf ein gemeinsam einzusetzendes Programm einigen, was die Flexibilität der Unternehmen einschränken kann. Folge hiervon ist, sich nur einige wenige Hersteller von Programmen für die Bearbeitung von Dokumenten am Markt etablieren konnten, wobei auch zwischen diesen Programmen ein reibungsloser Dokumentenaustausch nicht gewährleistet ist.

Ein weiterer Nachteil im Stand der Technik besteht darin, dass bei einer Konvertierung eines Dokuments von einem Format in ein anderes Format der hierfür verwendete Konverter immer auf den neuesten Stand gehalten werden muss. Hinzu kommt, dass bei *n* unterschiedlichen Formaten *n*(n-1)* Konverter zur Verfügung gestellt werden müssten, wenn jedes der *n* Formate in jedes andere Format konvertiert werden soll. Das bedeutet einen unkalkulierbaren Aufwand für das Erstellen und die Pflege der Konverter.

### Aufgabe der Erfindung

Aufgabe der Erfindung ist es daher, Lösungen bereitzustellen, die die genannten Nachteile zumindest teilweise vermeiden und die es einerseits ermöglichen, mit geringem Aufwand auch komplexe Dokumente in verschiedenen Formaten zu erstellen und zu bearbeiten und anderseits einen reibungslosen Dokumentenaustausch zwischen unterschiedlichen Programmen gewährleisten.

### Erfindungsgemäße Lösung

Gelöst wird diese Aufgabe mit den Verfahren nach den unabhängigen Ansprüchen. Vorteilhafte Ausgestaltungen und Weiterbildungen der Erfindung sind in den jeweiligen abhängigen Ansprüchen angegeben.

Bereitgestellt wird demnach ein Computer-implementiertes Verfahren zum Erzeugen eines elektronischen Dokuments in einem vorbestimmten Zielformat, wobei das Verfahren in einem Computersystem zur Ausführung gebracht wird und zumindest folgende Schritte umfasst:
- Bereitstellen eines Eingangsdokuments als Grundstruktur, in die Inhalte des zu erzeugenden elektronischen Dokuments einzufügen sind, wobei das Eingangsdokument in dem vorbestimmten Zielformat vorliegt,
- Bereitstellen einer Anzahl von Eingangselementen, wobei die Eingangselemente Inhalte umfassen, die in die Grundstruktur einzufügen sind,
- Bereitstellen einer Liste von Bausteinen, wobei ein Baustein zumindest eine Zeichenkette in dem vorbestimmten Zielformat umfasst,
   wobei
- die Eingangselemente einem Wandler zugeführt werden, wobei der Wandler für jedes Eingangselement
   - eine Analyse durchführt und die in die Grundstruktur einzufügenden Inhalte des Eingangselements ermittelt,
   - basierend auf dem Ergebnis der Analyse eine Anzahl von Bausteinen aus der Liste von Bausteinen auswählt, und
   - aus den ermittelten Inhalten und den ausgewählten Bausteinen zumindest ein Datensegment in dem vorbestimmten Zielformat erzeugt, und
- die Datensegmente und das Eingangsdokument einem Erzeuger zugeführt werden, wobei der Erzeuger die Datensegmente an vorbestimmten Stellen in die Grundstruktur des Eingangsdokuments einfügt und als Ergebnis hiervon das elektronische Dokument bereitstellt.

In der Grundstruktur können Marker vorgesehen werden, wobei die Marker die vorbestimmten Stellen in der Grundstruktur angeben, an denen die Datensegmente von dem Erzeuger einfügt werden.

Vorteilhaft ist es, wenn die Marker nach dem Einfügen der Datensegmente in dem bereitgestellten elektronischen Dokument erhalten bleiben.

Die Inhalte der Eingangselemente können zumindest Daten umfassen, die ausgewählt sind aus der Gruppe umfassend Texte, Grafiken, Tabellen, einbettbare Objekte, und Kombinationen hiervon.

Den Inhalten der Eingangselemente können Eigenschaften, insbesondere Formatierungen, zugeordnet sind, wobei der Wandler die Eigenschaften analysiert und
- für jede bekannte Eigenschaft zumindest einen Baustein aus der Liste von Bausteinen auswählt, die bekannte Eigenschaft durch den zumindest einen ausgewählten Baustein ersetzt, und bei Bedarf den ausgewählten Baustein basierend auf der bekannten Eigenschaft anpasst, und
- unbekannte Eigenschaften entfernt,
um die Datensegmente zu erzeugen.

Die Eingangselemente können Tags und Inhalte umfassen, wobei der Wandler
- eine Taganalyse durchführt, um die Tags und die Inhalte in den Eingangselementen zu ermitteln,
- für jeden ermittelten Tag zumindest einen zugehörigen Baustein aus der Liste von Bausteinen auswählt, und
- die ermittelten Inhalte und den zumindest einen ausgewählten Baustein zusammenfügt, um die Datensegmente zu erzeugen. Vorteilhaft ist es, wenn der Wandler in einer Speichereinrichtung, insbesondere in einem Arbeitsspeicher des Computersystems zumindest einen Zustandsspeicher erzeugt, wobei einer Anzahl von Bausteinen in der Liste von Bausteinen eine erste Eigenschaft und eine zweite Eigenschaft zugeordnet sind, wobei
- die erste Eigenschaft angibt, ob es sich bei dem Baustein um ein Anfangstag oder um ein Endtag handelt, wobei ein Endtag einem Anfangstag zugeordnet ist, und
- die zweite Eigenschaft angibt, um welche Gliederungsebene es sich bei dem Baustein handelt, wobei die Gliederungsebene ausgewählt ist aus der Gruppe zumindest umfassend Dokument, Abschnitt, Seite, Absatz, und Zeichen, wobei der Wandler beim Auswählen eines Bausteines aus der Liste von Bausteinen überprüft, ob es sich bei dem ausgewählten Baustein um ein Anfangstag oder um ein Endtag handelt, und
- wenn es sich um ein Anfangstag handelt, eine Information über das Anfangstag dem Zustandsspeicher hinzufügt, und
- wenn es sich um ein Endtag handelt, die Information über das Anfangstag, das dem Endtag zugeordnet ist, aus dem Zustandsspeicher entfernt.

In einer Ausgestaltung der Erfindung kann für jede Gliederungsebene ein eigener Zustandsspeicher erzeugt werden.

Die Eingangselemente können von einer externen Quelle, insbesondere einem Editor und/oder einer Datenbank bereitgestellt werden. Das Zielformat kann ein XML-basiertes Dateiformat, insbesondere OOXML umfassen. Das Zielformat kann aber auch jedes andere für das Erzeugen eines elektronischen Dokuments geeignetes Format umfassen, insbesondere auch proprietäre Formate.

Des Weiteren wird ein Computer-implementiertes Verfahren zum Extrahieren von Inhalten aus einem elektronischen Dokument bereitgestellt, wobei das Verfahren in einem Computersystem zur Ausführung gebracht wird und wobei
- das elektronische Dokuments als Eingangsdokument einem Extrahierer zugeführt wird, wobei das Eingangsdokument zumindest einen Marker enthält und wobei der zumindest eine Marker Stellen in dem Eingangsdokument angibt, an denen sich die zu extrahierenden Daten befinden,
- der Extrahierer anhand der in dem Eingangsdokument enthaltenen Marker zumindest ein Datensegment aus dem Eingangsdokument extrahiert,
- der Extrahierer die extrahierten Datensegmente einem Wandler zuführt, wobei die Datensegmente jeweils die zu extrahierenden Inhalte und Bausteine umfassen, wobei die Datensegmente beim Erzeugen des elektronischen Dokuments in dieses eingefügt wurden und wobei die Bausteine zumindest eine Zeichenkette in einem Format des Eingangsdokuments umfassen,
- der Wandler in den Datensegmenten die Bausteine entfernt und die in den Datensegmenten verbleibenden Inhalte für eine weitere Verarbeitung zur Verfügung stellt.

Das elektronische Dokument kann insbesondere mit dem erfindungsgemäßen Verfahren zum Erzeugen eines elektronischen Dokuments in einem vorbestimmten Zielformat erzeugt werden bzw. erzeugt worden sein.

Die in den Datensegmenten verbleibenden Inhalte können für eine weitere Verarbeitung einem Konverter zur Verfügung gestellt werden.

Der Konverter kann auf dem Computersystem ausgeführt werden und die zur Verfügung gestellten Inhalte werden vorteilhafter Weise gemäß einer vorbestimmten Verarbeitungsvorschrift verarbeitet.

Die Verarbeitungsvorschrift kann ausgewählt sein aus der Gruppe zumindest umfassend Erzeugen einer kommaseparierten Liste aus den Inhalten, Einfügen der Inhalte in eine Datenbank, Erzeugen eines elektronischen Dokuments gemäß dem erfindungsgemäßen Verfahren zum Erzeugen eines elektronischen Dokuments in einem vorbestimmten Zielformat, wobei die Inhalte als Eingangselemente zur Verfügung gestellt werden, und Kombinationen hiervon.

Bereit gestellt wird ferner ein Computer-implementiertes Verfahren zum Erzeugen eines elektronischen Dokuments in einem vorbestimmten Zielformat aus einem elektronischen Dokument in einem vorbestimmten Ausgangsformat, wobei das elektronischen Dokument in dem Ausgangsformat vorzugsweise mit einem erfindungsgemäßen Verfahren zum Erzeugen eines elektronischen Dokuments in einem vorbestimmten Format erzeugt wird und zumindest einen ersten Marker aufweist, wobei das Verfahren in einem Computersystem zur Ausführung gebracht wird und wobei
- das elektronische Dokument in dem vorbestimmten Zielformat als Grundstruktur bereitgestellt wird,
- eine Liste von zweiten Bausteinen bereitgestellt wird, wobei ein zweiter Baustein zumindest eine Zeichenkette in dem vorbestimmten Zielformat umfasst,
- das elektronische Dokument in dem vorbestimmten Ausgangsformat als Eingangsdokument einem Extrahierer zugeführt wird, wobei der Extrahierer anhand der in dem Eingangsdokument enthaltenen ersten Marker zumindest ein Datensegment aus dem Eingangsdokument extrahiert,
- der Extrahierer die extrahierten Datensegmente als Eingangselemente einem Wandler zuführt, wobei die Datensegmente jeweils Inhalte und erste Bausteine umfassen, wobei die ersten Bausteine zumindest eine Zeichenkette in dem vorbestimmten Ausgangsformat umfassen, wobei die ersten Bausteine beim Erzeugen des elektronischen Dokuments in dem Ausgangsformat in dieses eingefügt wurden, wobei der Wandler für jedes Eingangselement
   - eine Analyse durchführt und die Inhalte und die ersten Bausteine des Eingangselements ermittelt,
   - basierend auf dem Ergebnis der Analyse eine Anzahl von zweiten Bausteinen aus der Liste von Bausteinen auswählt, und
   - aus den ermittelten Inhalten und den ausgewählten zweiten Bausteinen zumindest ein Datensegment in dem vorbestimmten Zielformat erzeugt, und
- die in dem Zielformat erzeugten Datensegmente und die Grundstruktur einem Erzeuger zugeführt werden, wobei der Erzeuger diese Datensegmente an vorbestimmten Stellen in die Grundstruktur einfügt und als Ergebnis hiervon das elektronische Dokument in dem vorbestimmten Zielformat bereitstellt.

In der Grundstruktur können zweite Marker vorgesehen werden, wobei die zweiten Marker die vorbestimmten Stellen in der Grundstruktur angeben, an denen die Datensegmente von dem Erzeuger einfügt werden, wobei die zweiten Marker nach dem Einfügen der Datensegmente in dem bereitgestellten elektronischen Dokument in dem vorbestimmten Zielformat erhalten bleiben.

Die Inhalte der Eingangselemente können zumindest umfassen: Texte, Grafiken, Tabellen, einbettbare Objekte, und Kombinationen hiervon.

Vorzugsweise kann der Wandler
- für jeden bekannten ersten Baustein des Eingangselements zumindest einen zweiten Baustein aus der Liste von Bausteinen auswählen, den bekannten ersten Baustein durch den zumindest einen ausgewählten zweiten Baustein ersetzen, und bei Bedarf den ausgewählten zweiten Baustein basierend auf Eigenschaften des bekannten ersten Bausteins anpassen, und
- unbekannte erste Bausteine des Eingangselements entfernen,
um die Datensegmente zu erzeugen.

Vorteilhaft ist es, wenn der Wandler in einer Speichereinrichtung, insbesondere in einem Arbeitsspeicher des Computersystems zumindest einen Zustandsspeicher erzeugt, wobei einer Anzahl von zweiten Bausteinen in der Liste von Bausteinen eine erste Eigenschaft und eine zweite Eigenschaft zugeordnet sind, wobei
- die erste Eigenschaft angibt, ob es sich bei dem zweiten Baustein um ein Anfangstag oder um ein Endtag handelt, wobei ein Endtag einem Anfangstag zugeordnet ist, und
- die zweite Eigenschaft angibt, um welche Gliederungsebene es sich bei dem zweiten Baustein handelt, wobei die Gliederungsebene ausgewählt ist aus der Gruppe zumindest umfassend Dokument, Abschnitt, Seite, Absatz, und Zeichen, wobei der Wandler beim Auswählen des zweiten Bausteines aus der Liste von Bausteinen überprüft, ob es sich bei dem ausgewählten zweiten Baustein um ein Anfangstag oder um ein Endtag handelt, und
- wenn es sich um ein Anfangstag handelt, eine Information über das Anfangstag dem Zustandsspeicher hinzufügt, und
- wenn es sich um ein Endtag handelt, die Information über das Anfangstag, das dem Endtag zugeordnet ist, aus dem Zustandsspeicher entfernt.

In einer Ausgestaltung der Erfindung kann für jede Gliederungsebene ein eigener Zustandsspeicher erzeugt werden.

Bei den vorstehend genannten Verfahren können die Marker implizite und/oder explizite Marker umfassen.

### Kurzbeschreibung der Figuren

Nachstehend wird die Erfindung anhand der Zeichnung, welche lediglich Ausführungsbeispiele der Erfindung darstellt, näher erläutert. Es zeigt:
- Fig. 1: ein Blockdiagramm zur Verdeutlichung des erfindungsgemäßen Verfahrens zum Erzeugen eines elektronischen Dokuments;
- Fig. 1a: ein Blockdiagramm für das Erzeugen eines konkreten Dokuments;
- Fig. 2: ein detailliertes Blockdiagramm des in Fig. 1 gezeigten Wandlers;
- Fig. 3: ein Blockdiagramm zur Verdeutlichen des erfindungsgemäßen Verfahrens zum Extrahieren von Inhalten aus einem Dokument;
- Fig. 4: ein Blockdiagramm zur Verdeutlichen des erfindungsgemäßen Verfahrens zum Formatwechsel;
- Fig. 4a: ein konkretes Beispiel für einen Formatwechsel; und
- Fig. 5: eine beispielshafte Verarbeitungskette, bei der ein Dokument erzeugt wird, Inhalte extrahiert werden und ein Formatwechsel durchgeführt wird, jeweils gemäß den erfindungsgemäßen Verfahren.

### Detaillierte Beschreibung der Erfindung

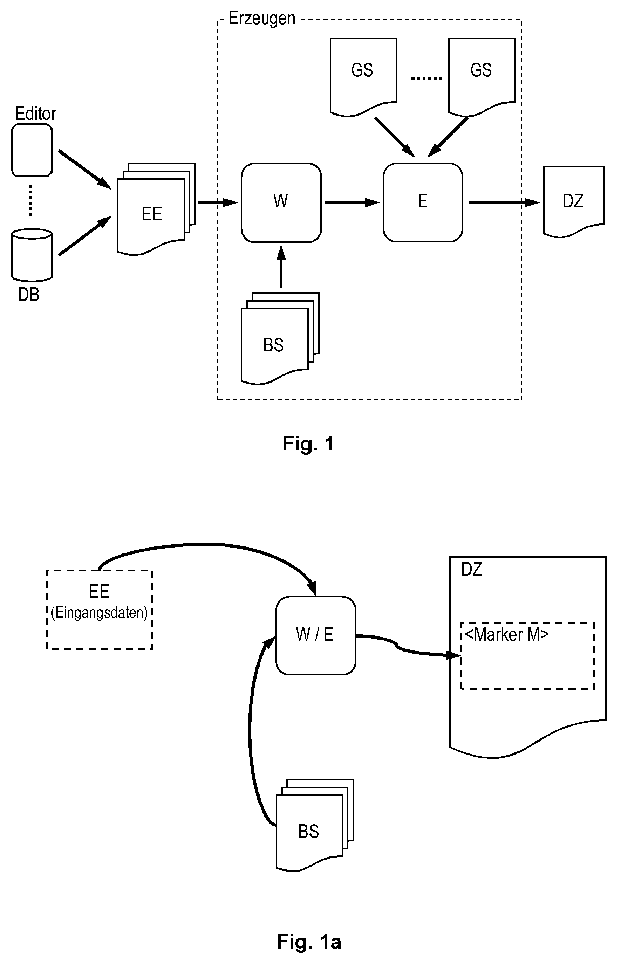

Fig. 1 zeigt ein Blockdiagramm zur Verdeutlichung des erfindungsgemäßen Verfahrens zum Erzeugen eines elektronischen Dokuments. Das "elektronische Dokument" bzw. die "elektronischen Dokumente" werden nachfolgend auch als "Dokument" bzw. "Dokumente" bezeichnet. Unter einem elektronischen Dokument wird ein Dokument verstanden, das mit Hilfe eines Computer-Programms (Programm für die Bearbeitung von Dokumenten) erzeugt oder bearbeitet wird.

Erfindungsgemäß erfolgt das Erzeugen eines Dokuments bausteinbasiert, d.h. auf Grundlage von Eingangselementen EE, Bausteinen BS und einer oder mehrerer Grundstrukturen GS wird ein Dokument DZ im Zielformat erzeugt. Die Eingangselemente EE, die Bausteine BS und die Grundstrukturen GS werden nachfolgend erläutert.

### Grundstrukturen GS

Eine Grundstruktur GS ist eine im Zielformat erstellte Datei, vorzugsweise ein leeres oder einen gewissen Rahmen aufweisendes Dokument im Zielformat. Die Grundstruktur GS kann von Hand oder von einem Programm, das das Zielformat unterstützt, erstellt werden.

Vorteilhaft ist es, wenn die Grundstruktur GS zumindest einen Marker M aufweist, der angibt, wo in dem zu erzeugenden Dokument DZ welche Inhalte einzufügen sind. Die Marker repräsentieren Einsprungpunkte für den Erzeuger E, der die Inhalte in das Dokument einfügt.

Als Marker M können explizite Marker vorgesehen sein, die bestimmte absolute Stellen in dem Dokument definieren. So kann ein expliziter Marker direkt an der gewünschten Stelle in der Grundstruktur eingefügt werden.

Alternativ oder zusätzlich können auch implizite Marker vorgesehen sein, die bestimmte relative Stellen in dem Dokument definieren. Die impliziten Marker können anhand von Regeln definiert werden. Beispiele für einen impliziten Marker sind etwa "nach dem fünften Absatz" oder "am Ende des Fließtextes".

Darüber hinaus kann die Grundstruktur GS optional enthalten:
- Bausteine BS
- Zweckspezifische Formatierungsvorgaben
- Informationen zur Identifizierung der Grundstruktur bei einem Formatwandel bzw. Formatwechsel des Dokuments

Mit der Grundstruktur GS wird demnach eine Art Grundgerüst in dem Zielformat bereitgestellt, das von dem Erzeuger E als Basis für die Erzeugung des Dokuments DZ im Zielformat verwendet.

### Eingangselemente EE

Eingangselemente EE sind solche Elemente, die in das zu erzeugende Dokument DZ einzufügen sind. Das können beispielsweise formatierte oder unformatierte Texte, Grafiken, Tabellen, einzubettende Objekte oder sonstige Elemente sein. Die Eingangselemente EE können aus unterschiedlichen Quellen stammen. Beispielsweise können sie ganz oder teilweise von einem Benutzer in einem Editor erzeugt werden. Die Eingangselemente EE können aber auch ganz oder teilweise aus Datenbanken DB oder ähnlichen Quellen stammen. Den Eingangselementen EE können bei Bedarf Eigenschaften (z.B. Größe einer Grafik, Breite einer Tabelle, etc.) zugeordnet sein.

Die Eingangselementen EE stellen demnach den eigentlichen Inhalt des im Zielformat zu erzeugenden Dokuments DZ dar. Teile des eigentlichen Inhaltes können bereits in der Grundstruktur GS vorhanden sein. Teile des Inhaltes, die bereits in der Grundstruktur GS vorhanden sein können, können beispielsweise ein Briefkopf oder eine Fußzeile sein.

### Bausteine BS

Bausteine BS sind vorgefertigte Zeichenketten im Zielformat. Die Bausteine BS können Marker, Variable und/oder Eigenschaften aufweisen. Die Bausteine BS sind in erster Linie dazu vorgesehen, Formatierungsanweisungen in den Eingangselementen EE durch entsprechende Formatierungsanweisungen im Zielformat zu ersetzten, wobei beispielsweise den Eigenschaften der Formatierungsanweisungen im Zielformat die entsprechenden Eigenschaften der Eingangselemente EE zugeordnet werden können.

Die Bausteine BS können in einer Bausteintabelle gespeichert werden. Die Bausteintabelle kann beliebig verkürzt oder erweitert werden.

Um aus den Eingangselementen EE, den Bausteinen BS und der/den Grundstruktur/en GS das Dokument DZ in dem Zielformat zu erzeugen sind erfindungsgemäß ein Wandler W und ein Erzeuger E vorgesehen, deren Funktionsweise nachfolgend erläutert wird.

### Wandler W

Dem Wandler W werden die Eingangselemente EE als Eingang zur Verfügung gestellt. Ferner hat der Wandler W Zugriff auf die Bausteine BS bzw. auf die Bausteintabelle, in der die Bausteine BS gespeichert sind.

Zunächst filtert bzw. analysiert der Wandler W die Eingangselemente EE und entfernt bei Bedarf nicht benötigten Vor- und Nachspann. Die in den Eingangselementen EE enthaltenen eigentlichen Inhalte werden von dem Wandler W nicht verändert.

Anhand der Eigenschaften der Eingangselemente EE wählt der Wandler dann die entsprechenden Bausteine BS aus der Bausteintabelle aus. Falls kein entsprechender Baustein BS in der Bausteintabelle vorhanden ist, wird die betreffende Eigenschaft entfernt bzw. nicht in das Zieldokument eingefügt.

Wie vorstehend erläutert, können die Bausteine BS Variablen enthalten (z.B. Position des Bildes). Soweit notwendig, ersetzt der Wandler W die Variablen der ausgewählten Bausteine BS durch entsprechende Informationen des Eingangs bzw. weist den Variablen der ausgewählten Bausteine BS von den Eingangselementen EE zur Verfügung gestellte Werte zu.

Aufgrund der Eigenschaften der ausgewählten Bausteine BS und/oder der Eingangselemente EE kann der Wandler W entscheiden, ob zusätzliche Aktionen durchzuführen sind. Solche zusätzliche Aktionen können beispielsweise das Aktivieren von in der Grundstruktur bereits enthaltenen Bausteinen sein.

Basierend auf den Inhalten der Eingangselemente EE und den ausgewählten und gegebenenfalls angepassten Bausteinen erzeugt der Wandler W eine Anzahl von Datensegmenten (Snippets) in dem Zielformat des zu erzeugenden Dokuments DZ. Diese Datensegmente übergibt der Wandler W gegebenenfalls mit benötigten Ressourcen an den Erzeuger E.

### Erzeuger E

Der Erzeuger E nimmt die von dem Wandler W bereitgestellten Datensegmente entgegen und fügt diese an die durch die Marker M festgelegten Stellen in die Grundstruktur GS ein. Die Grundstruktur GS (bzw. bei Bedarf mehrere Grundstrukturen) wird dem Erzeuger E zur Verfügung gestellt. Ferner kann der Erzeuger E die notwendigen Ressourcen (z.B. Bilder, eingebettete Objekte, Makros, etc.) überprüfen. Schon in der Grundstruktur GS vorhandene Ressourcen können von dem Erzeuger E aktiviert werden. Neue Ressourcen können von dem Erzeuger eingefügt werden. Ein Verweisverwalter des Erzeugers E kann Verweise auf Ressourcen aktualisieren, damit der Erzeuger E die referenzierten Ressourcen auch finden kann und in das zu erzeugende Dokument einfügen kann, z.B. als Referenz und/oder als direkt eingebettetes Objekt.

Als letzten Schritt erzeugt der Erzeuger E mit Hilfe der Grundstruktur GS das fertige Dokument DZ in dem Zielformat und speichert dieses gegebenenfalls als Datei ab. Bei Bedarf können die in der Grundstruktur vorhandenen Marker M entfernt werden. Vorteilhaft ist es jedoch, die Marker M in dem Dokument DZ zu belassen, um eine spätere Extraktion des Inhaltes zu erleichtern.

**Fig. 1a** zeigt ein Blockdiagramm für das Erzeugen eines konkreten Dokuments DZ im Zielformat.

Dem Wandler und Erzeuger W/E werden die Eingangsdaten in Form von Eingangselementen EE zur Verfügung gestellt. Ferner hat der Wandler und Erzeuger W/E Zugriff auf die Bausteine BS, die wie vorstehend mit Bezug auf Fig. 1 beschrieben, von dem Wandler verwendet werden. Anhand der Eingangselemente EE und der Bausteine BS erzeugt der Wandler und Erzeuger W/E Datensegmente und fügt diese an die durch den Marker M markierten Stelle in dem Dokument DZ ein, wobei als Grundlage für das Dokument DZ eine Grundstruktur GS verwendet wird, wie ebenfalls vorstehend mit Bezug auf Fig. 1 beschrieben.

In einem Ausführungsbeispiel kann ein Benutzer beispielsweise einen Geschäftsbrief schreiben der in DOCX-Format zur Verfügung gestellt werden soll. Der Benutzer kann hierzu in einer HTML-Maske in dafür vorgesehene Felder "Adresse" und "Text" die Anschrift und den Brieftext eingibt. Die Inhalte der beiden Felder werden als Eingangselemente EE dem Wandler W zur Verfügung gestellt. Der Wandler und Erzeuger W/E verarbeitet die Eingangselemente EE wie vorstehend mit Bezug auf Fig. 1 beschrieben und fügt die aus den Eingangselementen EE und den Bausteinen BS erzeugten Datensegmente an die dafür vorgesehenen Stellen (die durch Marker M gekennzeichnet sind) in die Grundstruktur "Geschäftsbrief". Die Grundstruktur "Geschäftsbrief" liegt hierbei im DOCX-Format vor. Der fertige Geschäftsbrief wird dann gespeichert und liegt dann im DOCX-Format vor, ohne dass eine Software für das Zielformat DOCX (z.B. Microsoft^{®} Word) notwendig ist.

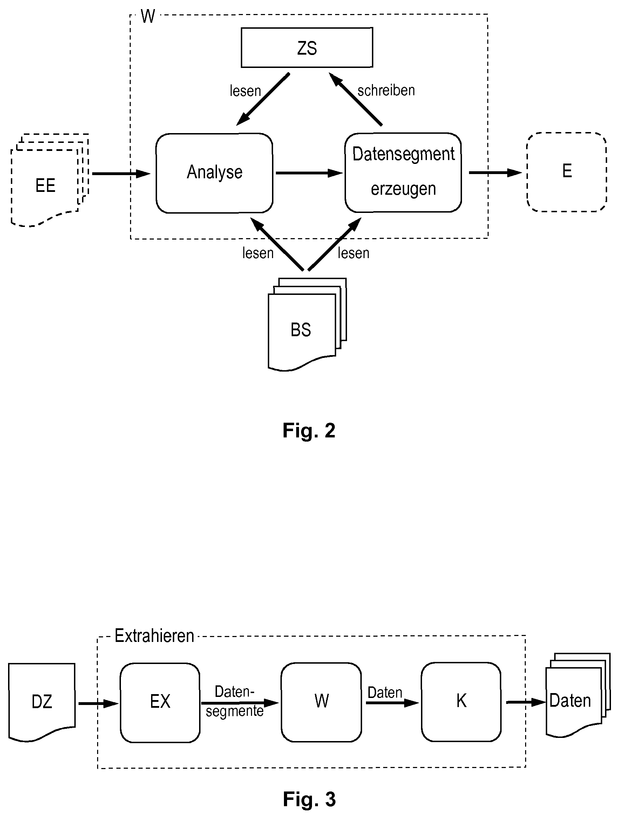

**Fig. 2** zeigt ein Blockdiagramm des in Fig. 1 gezeigten Wandlers W.

Die Eingangselemente EE werden dem Wandler W zugeführt, wo zunächst eine Analyse der Eingangselemente durchgeführt wird. Die Eingangselemente EE umfassen den in das Zieldokument einzufügenden Inhalt im Ursprungsformat, gegebenenfalls mit Tags versehen.

Während bzw. vor der Verarbeitung der Eingangselemente EE erzeugt der Wandler einen oder mehrere Zustandsspeicher ZS, in dem die aktuellen Gliederungsformatierungen in Form eines Stacks abgelegt werden. Eine Gliederungsformatierung ist beispielsweise die Formatierung eines Absatzes, eines Zeichens, eines Abschnittes, etc. Wird etwa eine einschaltende (öffnende) Absatzformatierung (z.B. ein Absatz-Tag mit Formatangaben) erkannt, wird diese dem Zustandsspeicher ZS hinzugefügt. Wird eine ausschaltende (schließende) Absatzformatierung erkannt, wird der entsprechende zuletzt hinzugefügte Eintrag aus dem Zustandsspeicher entfernt. Für jede Gliederungsebene kann ein eigener Zustandsspeicher erzeugt bzw. verwendet werden. Gliederungsebenen sind etwa Absatz, Zeichen, Abschnitt, etc.

Im Rahmen der Analyse wird eine Analyse der in den Eingangselementen EE enthaltenen Tags durchgeführt. Die Eingangselemente EE werden vorzugsweise sequentiell bzw. linear eingelesen und verarbeitet, d.h. die in den Eingangselementen EE enthaltenen Tags werden in der Reihenfolge ihres Auftretens verarbeitet.
- Ist das Tag bekannt, wird ein passender Baustein BS in der Bausteintabelle identifiziert und die dazugehörigen Eigenschaften werden aus der Bausteintabelle gelesen. Ferner wird für das Tag der aktuelle Zustand aus dem Zustandsspeicher ZS gelesen, sofern es sich bei dem Tag um ein Gliederungstag (Absatz, Zeichen, Abschnitt, etc.) handelt. Handelt es sich bei dem Tag beispielsweise um ein Absatz-Tag wird aus dem Zustandsspeicher ZS die zuletzt dem Stack hinzugefügte Absatzformatierung gelesen.
- Ist das Tag nicht bekannt, so wird es verworfen.

Aus den Eigenschaften der Bausteine, den aktuellen Zuständen der Tags und den Inhalten wird ein Datensegment erzeugt. Hierzu wird der entsprechende Baustein aus der Bausteintabelle gelesen. Gegebenenfalls werden Variablen in den Bausteinen ersetzt bzw. werden den Variablen Werte zugwiesen. Der Inhalt und die Bausteine werden dann zu einem oder mehreren Datensegmenten zusammengesetzt, die dann dem Erzeuger E übergeben werden. Dem Erzeuger E wird demnach der Inhalt mit Tags im Zielformat übergeben.

Ferner wird ein neuer Zustand (sofern vorhanden) in Abhängigkeit von der aktuellen Gliederungsebene (Absatz, Zeichen, Abschnitt, etc.) dem entsprechenden Zustandsspeicher ZS hinzugefügt. So wird beispielsweise bei einem schließenden Absatz-Tag die zuletzt hinzugefügte Absatzformatierung aus dem Zustandsspeicher ZS entfernt. Handelt es sich hingegen um ein einfaches Tag (kein öffnendes oder schließendes Tag) wird dieses Tag einfach durch ein entsprechendes Tag des Zielformats ersetzt.

Ein konkretes Beispiel für das Erzeugen eines Dokumentes im Zielformat wird weiter unten angegeben.

Wie mit Bezug auf Fig. 1 erläutert, kann das Erzeugen eines Dokuments DZ im Zielformat auf Basis mehrerer Grundstrukturen GS durchgeführt werden. Die Eingangselemente EE enthalten hier nun zusätzlich Informationen über die gewünschte Grundstruktur, d.h. Informationen darüber, in welche Grundstruktur die jeweiligen Inhalte einzufügen sind. Jede Grundstruktur kann zusätzlich Information über einen bestimmten Dokumenttyp enthalten, etwa "Kopf- und Fußzeile eines Briefes", "Nur Formatierungen der Kopf- und Fußzeile eines Briefes", etc. In diesem Fall ist es ausreichend, wenn die Eingangselemente EE nur noch den Nutzinhalt des zu erzeugenden Dokuments enthalten, der dann von dem Erzeuger E direkt in die jeweilige Grundstruktur eingefügt werden kann. Diese Variante hat den Vorteil, dass die Baustein BS bzw. die Bausteintabelle wesentlich einfacher gehalten werden kann. Denn es sind nun noch die Formatierungen der Elemente der Benutzereingaben notwendig.

**Fig. 3** zeigt ein Blockdiagramm zur Verdeutlichen des erfindungsgemäßen Verfahrens zum Extrahieren von Inhalten aus einem Dokument. In einer Ausgestaltung der Erfindung kann das Dokument, aus dem die Inhalte extrahiert werden, mit dem zuvor beschriebenen Verfahren erzeugt werden, also ein Dokument DZ im Zielformat sein.

Das Dokument DZ wird dem Extrahierer EX als Eingangsdokument zugeführt. Das Eingangsdokument weist Marker und gegebenenfalls Informationen über die bei der Erzeugung des Dokuments verwendete Grundstruktur bzw. Grundstrukturen auf. Die Marker können implizite oder explizite Marker umfassen, wie mit Bezug auf Fig. 1 beschrieben.

Der Extrahierer EX extrahiert anhand der in dem Eingangsdokument enthaltenen Marker zumindest ein Datensegment. Jedes der extrahierten Datensegmente weist einen zu extrahierenden Inhalt (Nutzdaten) und zumindest einen Baustein oder gegebenenfalls eine Formatierung (z.B. in Form von Tags) auf. Das bedeutet, dass die extrahierten Datensegmente Inhalte im Quellformat des Eingangsdokuments repräsentieren. Wichtig ist hierbei, dass zwischenzeitlich in den Nutzdaten des Eingangsdokuments vorgenommene Änderungen extrahiert werden, also der aktuelle Stand der Nutzdaten. Änderungen an der Grundstruktur des Eingangsdokuments bleiben hingegen unberücksichtigt, da die Grundstruktur selbst nicht berücksichtigt wird.

Beim Extrahieren der Datensegmente können diesen Bezeichner (z.B. eindeutige Kennungen) zugeordnet werden. Alternativ kann der Bezeichner bereits Bestandteil des extrahierten Datensegments sein.

Die so extrahierten Datensegmente (Inhalte samt Bausteine bzw. Formatierungen) werden zusammen mit den jeweiligen Bezeichnern einem Wandler W übergeben. Der Wandler W entspricht dem mit Bezug auf Fig. 1 und Fig. 1a beschriebenen Wandler, mit dem Unterschied, dass der Wandler W hier ohne Bausteine BS bzw. ohne Bausteintabelle betrieben wird. Daher klassifiziert der Wandler W die Bausteine bzw. Formatierungen in den extrahierten Datensegmenten als nicht unterstützt bzw. als nicht bekannt und entfernt sie daher aus den Datensegmenten. Der Wandler bereinigt daher die Datensegmente um die Bausteine bzw. Formatierungen. Im Ergebnis stellt der Wandler reine Inhalte (z.B. Texte, Grafiken, etc.) mit den dazugehörigen Bezeichnern für die weitere Verarbeitung zur Verfügung.

Die Inhalte werden dann mit den jeweiligen Bezeichnern einem Konverter K übergeben. Der Konverter K wandelt die Inhalte in ein gewünschtes Format zur Weiterverarbeitung. In einfachsten Fall kann der Konverter K aus den Inhalten eine kommaseparierte Datei erzeugen. In einem anderen Fall kann der Konverter die Inhalte in eine Datenbank schreiben, wobei die den Inhalten zugeordneten Bezeichner beispielsweise dazu verwendet werden können, den jeweiligen Inhalt in die korrekte Spalte einer Datenbanktabelle zu schreiben.

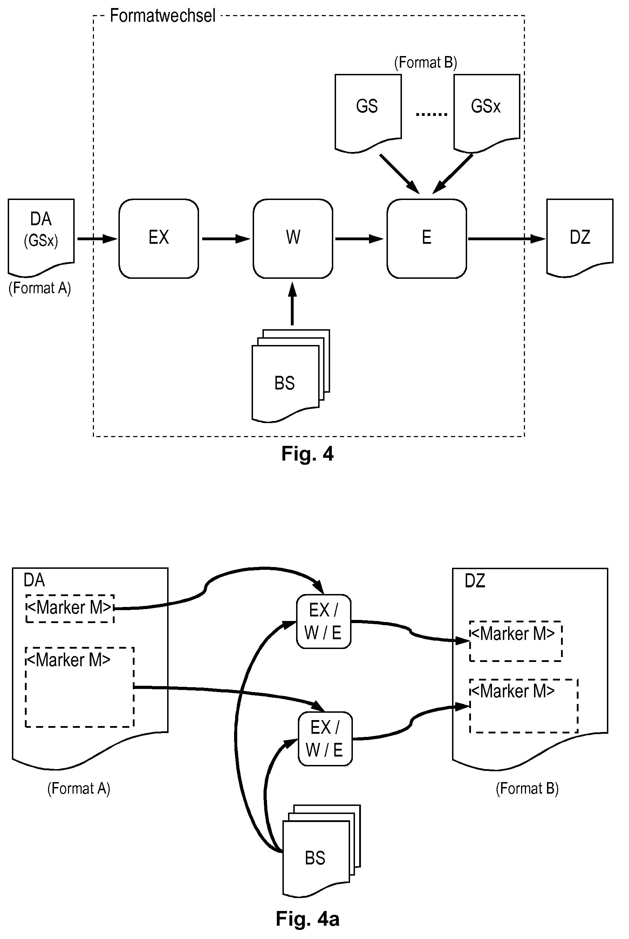

**Fig. 4** zeigt ein Blockdiagramm zur Verdeutlichen des erfindungsgemäßen Verfahrens zum Formatwechsel. Mit diesem Verfahren kann ein Dokument DA in einem Ausgangsformat in ein Dokument DZ in einem Zielformat überführt werden, beispielsweise von OOXML nach OpenDocument, von RTF nach DOCX oder von HTML nach DOCX um nur einige zu erwähnen. Das Dokument DA ist vorteilhafter Weise mit dem zuvor beschriebenen Verfahren erzeugt worden.

Voraussetzung für einen erfolgreichen Formatwechsel ist, dass für das Zielformat eine Grundstruktur GS vorhanden ist. Vorteilhaft kann es jedoch sein, wenn auch für das Ausgangsformat eine Grundstruktur vorhanden ist.

Im nachfolgenden Beispiel wird davon ausgegangen, dass sowohl für das Ausgangsdokument als auch für das Zieldokument jeweils eine Grundstruktur bekannt ist.

In einem ersten Schritt wird das Dokument DA dem Extrahierer EX als Eingangsdokument zugeführt, wobei nachfolgend davon ausgegangen wird, dass das Eingangsdokument im Format A vorliegt und auf der Grundstruktur GSx basiert und in ein Dokument im Format B überführt werden soll.

Wie bei der mit Bezug auf Fig. 3 beschriebenen Extraktion von Daten extrahiert der Extrahierer EX hier Datensegmente aus dem Eingangsdokument und übergibt diese gegebenenfalls mit den dazugehörigen Bezeichnern dem Wandler W. Die extrahierten Datensegmente weisen das Format A auf.

Der Wandler W wird hier mit Bausteinen BS bzw. mit einer Bausteintabelle betrieben. Die Bausteintabelle enthält Informationen, die es dem Wandler W ermöglichen, Bausteine des Formats A nach Bausteine des Formats B zu überführen. Die Arbeitsweise des Wandlers W entspricht dem mit Bezug auf Fig. 1 und Fig. 1a beschriebenen Wandler. Als Ergebnis liefert der Wandler W Datensegmente in dem Format B zurück.

Die in dem Format B vorliegenden Datensegmente werden anschließend von dem Wandler W dem Erzeuger E übergeben. Zudem wird dem Erzeuger E bekannt gegeben, auf welcher Grundstruktur (GSx) das Eingangsdokument DA basiert. Der Erzeuger E wählt anhand der bekannt gegebenen Grundstruktur die entsprechende Grundstruktur GSx im Format B aus, um das Dokument DZ im Zielformat (d.h. im Format B) zu erzeugen. Wie mit Bezug auf Fig. 1 erläutert setzt der Erzeuger E die erhaltenen Datensegmente (im Format B) an die durch die Marker in der Grundstruktur GSx festgelegten Stellen in die Grundstruktur GSx (im Format B) ein und führt anhand des Typs und der mitgegebenen Eigenschaften gegebenenfalls weitere Aktionen durch.

Im Ergebnis steht dann das Dokument DZ im Zielformat (Format B) zur Verfügung.

Anhand von **Fig. 4a** wird der in Fig. 4 gezeigte Ablauf anhand eines konkreten Beispiels erläutert.

Das im Format A vorliegende Ausgangsdokument DA enthält eine Anzahl von Datensegmenten, die jeweils mittels Marker identifizierbar und lokalisierbar sind. Das

Ausgangsdokument DA wird einem Formatwechselmodul EX/W/E, das die mit Bezug auf Fig. 4 beschriebenen Extrahierer EX, Wandler W und Erzeuger E enthält, zugeführt. Ferner hat das Formatwechselmodul Zugriff auf Bausteine BS bzw. auf eine Bausteintabelle.

Das Formatwechselmodul extrahiert anhand der Marker die Datensegmente aus dem Ausgangsdokument DA und verarbeitet diese, wie mit Bezug auf Fig. 4 erläutert. Anschließend werden die verarbeiteten Datensegmente, die nun in dem Format B vorliegen, in das Dokument DZ an die durch Marker gekennzeichneten Stellen eingefügt. Nach Einfügen sämtlicher Datensegmente in das Dokument DZ ist das Ausgangsdokument DA vollständig von dem Format A in das Format B konvertiert.

An dieser Stelle sei erwähnt, dass sowohl die Marker in dem Ausgangsdokument DA als auch die Marker in dem Zieldokument DZ implizite und/oder explizite Marker umfassen können.

Im Folgenden wird ein konkretes Beispiel für das Erzeugen eines Dokumentes in einem Zielformat angegeben, wobei hier aus einem im HTML-Format vorliegenden Ausgangsdokument ein Dokument im DOCX-Format bzw. im OOXML-Format erzeugt wird.

Das Ausgangsdokument wird wie folgt visualisiert:
Das ist ein Text in **fett**, ***kursiv und unterstrichen.***
Dies ist eine Aufzählung:
   - 1.: Punkt eins
   - 2.: Punkt zwei
   - 3.: Punkt drei

Diesem Ausgangsdokument liegt folgender HTML-Code bzw. HTML-Datei zugrunde:

```
      <p>
      Das ist ein Text in <b>fett, <i>kursiv und
      <u>unterstrichen</i></b>.
      </p>
      <p></p>
      <p>Dies eine Aufzählung:</u></p>
      <ol>
             <li>Punkt eins</li>
             <li>Punkt zwei</li>
             <li>Punkt 3</li>
      </ol>
```

mit
- <p>: Absatzbeginn
- <b>: fett
- <u>: unterstrichen
- <ol>: nummerierte Liste
- <li>: einzelner Listeneintrag
- </xxx>: Ende-Tag

Dem Wandler wird diese HTML-Datei zugeführt, der dann die HTML→DOCX-Bausteine bzw. Bausteintabelle auswählt. Die Bausteintabelle kann als Datei gespeichert sein. Die HTML→DOCX-Bausteine enthalten Information darüber, wie HTML-Formate in die jeweiligen DOCX-Formate zu überführen sind.

Zuerst entfernt der Wandler, sofern in der Bausteintabelle so definiert und sofern im Ausgangsdokument vorhanden, unnötige Headerinformationen oder sonstige für den Formatwechsel unnötige Informationen. Hierzu wird angemerkt, dass im DOCX- bzw. OOXML-Format die kleinste Einheit ein sogenannter "run" (<w:r>) ist - ein Textstück mit gleicher Formatierung oder ein Element, wie ein Bild im Text. Übergeordnet ist der "paragraph" (<w:p>), also der Absatz.

Anschließend liest der Wandler die HTML-Datei weiter bis zum nächsten Tag, das hier das <b>-Tag ist. Dieses Tag findet der Wandler in der Bausteintabelle als folgenden Eintrag:

| | | | | |
|---|---|---|---|---|
| TAG | b | ZEICHEN | TEXTOUT | <w:rPr><w:b/></w:rPr> |

Dem Tag <b> ist die Zeichenkette <w: rPr><w:b/></w: rPr> zugeordnet sowie eine Aktion "TEXTOUT". Zudem ist für das Tag <b> definiert, dass es sich hierbei um eine Zeichenformatierung (ZEICHEN) handelt. Die Aktion TEXTOUT wiederum ist in der Bausteintabelle (hier nicht wiedergegeben) definiert als: setzte vor dem Tag ein TEXTBEGIN und nach dem Tag ein TEXTEND.

TEXTBEGIN und TEXTEND wiederum sind in der Bausteintabelle definiert als:

| | | |
|---|---|---|
| DEFINITION | TEXTBEGIN | </w:t> |
| DEFINITION | TEXTEND | <w:t xml:space="preserve"> |

Der Wandler ersetzt also basierend auf den vorstehend genannten Bausteinen das HTML-Tag <b> durch TEXTBEGIN <w:rPr><w:b/></w:rPr> TEXTEND.

Das Zwischenergebnis nach dieser Ersetzung sieht wie folgt aus:

```
      Das ist ein Text in </w:t>
      <w:rPr><w:b/></w:rPr>
      <w:t xml:space="preserve">fett, <i>kursiv und <u>
      unterstrichen</i></b>.
      ...
```

Als Eigenschaften sind zum Tag <b> in der Bausteintabelle "ZEICHEN" und "TAG" definiert. Damit wird das Tag <b> als Start-Tag für eine Zeichenformatierung festgelegt. Der Wandler wird dadurch veranlasst, diese aktivierte Zeichenformatierung in den Zustandsspeicher zu schreiben. Das bedeutet, dass diese Zeichenformatierung vom Wandler solange auf den zu verarbeitenden Inhalt angewandt wird, bis ein entsprechendes End-Tag </b> in der HTML-Datei gefunden wird.

Die nächsten beiden Tags <i> und <u> werden nach demselben Schema verarbeitet. Weil es sich auch hierbei um Zeichenformatierungen handelt, werden auch diese in den Zustandsspeicher geschrieben, der nun die Informationen "fett", "kursiv" und "unterstrichen" enthält.

Als nächstes wird vom Wandler das End-Tag </i> verarbeitet. Hierbei hat sich nun eine Eigenschaft geändert. Anstelle des Eintrages mit der Eigenschaft TAG wird für das Tag </i> der Eintrag mit der Eigenschaft TAGCLOSE aus der Bausteintabelle gelesen. Hierzu findet der Wandler in der Bausteintabelle folgenden Eintrag:

| | | | | |
|---|---|---|---|---|
| TAGCLOSE | i | ZEICHEN | TEXTOUT | <w:rPr><w:i w:val= "false"/></w:rPr> |

Der Mechanismus der Umsetzung </i> nach <w:rPr><w:i w:val="false"/></w:rPr> bleibt derselbe, wie vorstehend für das Tag <b> beschreiben. Allerdings veranlasst die Eigenschaft TAGCLOSE den Wandler die dem Tag <i> zugeordnete Formatierung aus dem Zustandsspeicher zu entfernen.

Der Zustandsspeicher für die Zeichenformate enthält nun noch die Informationen "fett" und "unterstrichen". Mit dem nächsten Tag </b> wird analog verfahren, wobei auch hier die zugehörige Formatierung "fett" aus dem Zustandsspeicher gelöscht wird, der dann nur noch die Formatierung "unterstrichen" als aktive Formatierung enthält.

Bei einigen Formaten, etwa dem OOXML-Format, ist es notwendig, dass Zeichenformatierungen nach bestimmten Tags, etwa nach einem Absatz-Tag, wiederholt werden müssen. Hierbei zeigt sich ein wesentlicher Vorteil des Zustandsspeichers, in dem die aktiven Zeichenformatierungen gespeichert sind, wie am Beispiel des als nächstes vom Wandler verarbeiteten Tags <p> deutlich wird.

In der Bausteintabelle findet der Wandler für das Tag <p> folgenden Eintrag:

| | | | |
|---|---|---|---|
| TAG | p | TEXTOUT | </w:r></w:p><w:p>ABSATZ<w:r>ZEICHEN |

Die Eigenschaft ABSATZ wird durch den aktuellen Inhalt des Zustandsspeichers für Absatzformatierungen ersetzt, der im vorliegenden Beispiel leer ist. Die Eigenschaft ZEICHEN wird durch den aktuellen Inhalt des Zustandsspeichers für Zeichenformatierungen ersetzt, also mit der Information "unterstrichen". Damit erzeugt der Wandler für das Tag <p> folgende Ausgabe:

```
      </w:r> </w:p> <w:p> <w:r>
      <w:rPr> <w:u w:val="single"/> </w:rPr> <w:t
            xml:space="preserve">
```

wobei <w:u w:val="single"/> der Information "unterstrichen" aus dem Zustandsspeicher für Zeichenformatierungen entspricht.

Damit bleibt der nachfolgende Text "Dies eine Aufzählung:" weiterhin unterstrichen.

Mit den restlichen Tags wird so verfahren wie vorstehend erläutert.

In dem vorstehenden Beispiel wurden lediglich Zeichenformatierungen verwendet. In analoger Weise können auch Absatzformatierungen umgesetzt werden, d.h. von einem Format in ein anderes Format gewandelt werden. Absatzformate sind Formatierungen, die einen ganzen Absatz betreffen, etwa rechts- oder linksbündig.

Die aktivierten Absatzformatierungen können in dem vorstehend genannten Zustandsspeicher für Absatzformatierungen gespeichert werden.

Die Funktionsweise sei hier lediglich am Beispiel eines "zentrierten Absatzes" gezeigt. Sie gilt grundsätzlich auch für jede andere Absatzformatierung.

In der Bausteintabelle wird dem Tag "zentrierter Absatz" (im Ausgangsformat HTML z.B. <p align="center">) die entsprechende Sequenz der Zielsprache (im Zielformat OOXML z.B. <w:pPr><w:jc w:val="center"/></w:pPr>) zugeordnet. In der Bausteintabelle findet der Wandler hierzu folgenden Eintrag:

| | | |
|---|---|---|
| TAG | p align="center" ABSATZ TEXTOUT | <w:pPr> |
| | | <w:jc w:val="center"/> |
| | | </w:pPr> |

Die Eigenschaft ABSATZ signalisiert dem Wandler, dass er diese Formatierung im Zustandsspeicher für Absatzformatierungen speichert.

In dem oben genannten Beispiel

| | | | |
|---|---|---|---|
| TAG | p | TEXTOUT | </w:r></w:p><w:p>ABSATZ<w:r>ZEICHEN |

wäre der Zustandsspeicher für Absatzformatierungen nicht leer. Demnach würde die Eigenschaft ABSATZ durch den aktuellen Inhalt des Zustandsspeichers für Absatzformatierungen ersetzt werden, nämlich durch <w:pPr> <w:jc w:val="center"/> </w:pPr>.

Der Wandler würde dann für das oben genannte Tag <p> anstelle der Ausgabe

```
      </w:r> </w:p> <w:p> <w:r>
      <w:rPr> <w:u w:val="single"/> </w:rPr> <w:t
            xml:space="preserve">
```

folgende Ausgabe erzeugen:

```
      </w:r> </w:p> <w:p>
          <w:pPr> <w:jc w:val="center"/> </w:pPr>
      <w:r>
      <w:rPr> <w:u w:val="single"/> </w:rPr> <w:t
            xml:space="preserve">
```

Weitere Gliederungsebenen, etwa (mehrstufige) Aufzählungen, Abschnitte, Seiten etc. werden analog zu der eben beschriebenen Gliederungsebene "Absatz" verarbeitet.

Weisen einzufügende Bausteine Variablen auf, etwa in der Form

```
      <wp:extent cx=""%ext_x%"" cy=""%ext_y%""/>
```

wobei cx und cy die Variablen und %ext_x% und %ext_y% die jeweils zugehörigen Platzhalter für die Variablenwerte sind (cx und cy geben die Position der Grafik an), kann der Wandler die konkreten Werte der Variablen den Eingangselementen entnehmen, gegebenenfalls verarbeiten und dann anstelle der Platzhalter in den Baustein einsetzen.

Ferner können einzufügende Bausteine Variablen mit Platzhaltern für die Variablenwerte aufweisen, wobei die Variablen mit den dazugehörigen Werten Verweise auf externe Objekte, etwa Grafiken, Makros oder sonstige eingebettete Objekte repräsentieren. Ein Beispiel hierzu ist nachfolgender, vereinfacht dargestellter Baustein, mit dem eine Grafik in das zu erzeugende Dokument eingefügt werden kann:

```
      <pic:pic>
         <pic:nvPicPr>
             <p:cNvPr id=""%nv_id%"" name=""%filename%""/>
         </pic:nvPicPr>
      </pic:pic>
```

Der Verweisverwalter ordnet hierbei der Variable id eine eindeutige Kennung zu und ersetzt den Platzhalter %nv_id% durch diese Kennung. Die Grafik selbst kann dem Wandler mit den Eingangselementen zur Verfügung gestellt werden. Der Wandler kann dann noch der Variable name anstelle des Platzhalters %file-name% einen (gegebenenfalls eindeutigen) Dateinamen zuordnen. Wird ein Dokument beispielsweise im OOXML-Format erzeugt, wird die Zuordnung der Kennung zur tatsächlichen Quelle der Grafik in der zum Dokument gehörenden .rels-Datei angegeben. Ein entsprechender Eintrag in der .rels-Datei kann folgendermaßen aussehen:

```
      <Relationship Id = "rId9" ... Target = "media/im-
      agel.jpg"/>
```

Vorstehend ist ein konkretes Beispiel zum Formatwechsel eines elektronischen Dokuments vom HTML-Format in das OOXML-Format angegeben worden. Mit dem erfindungsgemäßen Verfahren können jedoch grundsätzlich sämtliche Ausgangsformate in sämtliche Zielformate konvertiert werden. Es müssen lediglich entsprechende Grundstrukturen und entsprechende Bausteine bzw. Bausteintabelle zur Verfügung gestellt werden. Eine komplizierte und fehleranfällige Implementierung spezieller Konverter kann so vermieden werden.

Ein Vorteil der Erfindung besteht insbesondere darin, dass für sämtliche Formate immer derselbe Wandler bzw. Erzeuger verwendet werden kann. Formatabhängig sind lediglich die dem Wandler bzw. Erzeuger zugeführten Bausteine und Grundstrukturen. Die Bausteine können so definiert werden, dass sämtliche Fähigkeiten der verwendeten Formate (Ausgangs- und Zielformat) verwendet bzw. genutzt werden können. Damit wird es möglich, im Rahmen der Bausteine und Grundstruktur(en) eine verlustfreie Konvertierung von Dokumenten vorzunehmen. Ändert sich ein Zielformat, so müssen lediglich die entsprechenden Bausteine angepasst werden, ein Anpassen der Wandlers und/oder Erzeuger ist nicht notwendig.

Ein Vorteil ist es ferner, dass die Eingangselemente unterschiedliche Formate aufweisen können und daraus dennoch ein Dokument in einem bestimmten Zielformat erzeugt werden kann. Hierzu müssen lediglich die entsprechenden Bausteine zur Verfügung gestellt werden, die die unterschiedlichen Eingangsformate auf das Zielformat abbilden können. Beispielsweise können Kopf- und Fußzeile eines zu erzeugenden Geschäftsbriefes im OOXML-Format, die Anschrift aus einer Datenbank und der Brieftext im HTML-Format als Eingangselemente zur Verfügung gestellt werden. Auf diese Weise können Inhalte aus unterschiedlichen Quelle in ein einziges Dokument zusammengeführt werden.

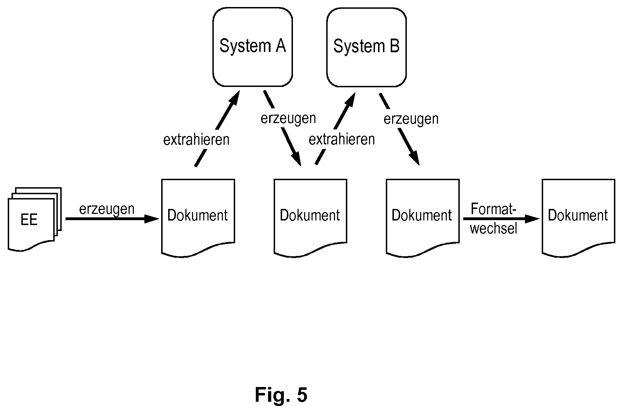

Ein weiterer Vorteil liegt darin, dass durch das Vorsehen von Grundstruktur(en) und Bausteinen der in den verwendeten Formaten eigentlich zur Verfügung stehende Funktionsumfang für den Anwender eingeschränkt werden kann. Beispielsweise kann in den Bausteinen vorgesehen werden, dass nur bestimmte Aufzählungsformate verwendet werden können, obwohl das Ausgangsformat und/oder das Zielformat weit mehr Aufzählungsformate zur Verfügung stellt. Dadurch kann beispielsweis gewährleistet werden, dass unternehmensweit nur Dokumente erstellt werden können, die die Anforderungen eines Corporate Designs erfüllen. Eine Anpassung der Fähigkeiten des Wandlers und/oder des Erzeugers kann einfach durch ein Anpassen der Bausteine und gegebenenfalls der Grundstruktur(en) erfolgen. Fig. 5 zeigt schließlich ein Blockdiagramm für eine beispielshafte Verarbeitungskette, bei der ein Dokument erzeugt wird, Inhalte extrahiert werden und ein Formatwechsel durchgeführt wird. Das Erzeugen eines Dokuments, das Extrahieren der Inhalte und das Wechseln eines Formats erfolgen gemäß der vorstehend beschriebenen erfindungsgemäßen Verfahren.

Bei dem in Fig. 5 gezeigten Beispiels wird aus den Eingangselementen EE ein Dokument in einem ersten Format erzeugt. Aus diesem Dokument werden in bzw. mit dem System A die Inhalte extrahiert und in ein Dokument in einem zweiten Format eingefügt bzw. wird aus den extrahierten Inhalten das Dokument in dem zweiten Format erzeugt. In analoger Weise wird dann mittel Extraktion und Einfügen aus dem Dokument in dem zweiten Format ein Dokument in einem dritten Format erzeugt. Für dieses Dokument in dem dritten Format wird abschließend ein Formatwechsel durchgeführt, um ein Dokument in einem vierten Format zu erhalten.

Erfindungsgemäß ist es also möglich die Verfahren zum Erzeugen eines Dokuments, zum Extrahieren von Inhalten aus einem Dokument und zum Wechseln eines Formats beliebig miteinander zu kombinieren. Dadurch können beliebige komplexe Dokumentenworkflows realisiert werden.

### Bezugszeichen:

- BS: Bausteine
- DA: elektronisches Dokument im Ausgangsformat
- DE: leeres Eingangsdokument als Grundstruktur GS
- DZ: elektronisches Dokument im Zielformat
- E: Erzeuger
- EX: Extrahierer
- EE: Eingangselemente
- GS: Grundstruktur (leeres Eingangsdokument DE)
- K: Konverter
- M: Marker
- W: Wandler
- ZS: Zustandsspeicher

## Patentansprüche

1. Computer-implementiertes Verfahren zum Erzeugen eines elektronischen Dokuments (DZ) in einem vorbestimmten Zielformat, wobei das Verfahren in einem Computersystem zur Ausführung gebracht wird und zumindest folgende Schritte umfasst:
- Bereitstellen eines Eingangsdokuments (DE) als Grundstruktur (GS), in die Inhalte des zu erzeugenden elektronischen Dokuments (DZ) einzufügen sind, wobei das Eingangsdokument (DE) in dem vorbestimmten Zielformat vorliegt,
- Bereitstellen einer Anzahl von Eingangselementen (EE), wobei die Eingangselemente Inhalte umfassen, die in die Grundstruktur (GS) einzufügen sind,
- Bereitstellen einer Liste von Bausteinen (BS), wobei ein Baustein zumindest eine Zeichenkette in dem vorbestimmten Zielformat umfasst,
wobei
- die Eingangselemente (EE) einem Wandler (W) zugeführt werden, wobei der Wandler für jedes Eingangselement
- eine Analyse durchführt und die in die Grundstruktur (GS) einzufügenden Inhalte des Eingangselements ermittelt,
- basierend auf dem Ergebnis der Analyse eine Anzahl von Bausteinen (BS) aus der Liste von Bausteinen (BS) auswählt, und
- aus den ermittelten Inhalten und den ausgewählten Bausteinen zumindest ein Datensegment in dem vorbestimmten Zielformat erzeugt, und
- die Datensegmente und das Eingangsdokument (DE) einem Erzeuger (E) zugeführt werden, wobei der Erzeuger die Datensegmente an vorbestimmten Stellen in die Grundstruktur des Eingangsdokuments einfügt und als Ergebnis hiervon das elektronische Dokument (DZ) bereitstellt.

2. Verfahren nach dem vorhergehenden Anspruch, wobei in der Grundstruktur (GS) Marker (M) vorgesehen werden, wobei die Marker die vorbestimmten Stellen in der Grundstruktur angeben, an denen die Datensegmente von dem Erzeuger (E) einfügt werden, wobei die Marker nach dem Einfügen der Datensegmente in dem bereitgestellten elektronischen Dokument (DZ) vorzugsweise erhalten bleiben.

3. Verfahren nach einem der vorhergehenden Ansprüche, wobei die Inhalte der Eingangselemente (EE) zumindest Daten umfassen, die ausgewählt sind aus der Gruppe umfassend Texte, Grafiken, Tabellen, einbettbare Objekte, und Kombinationen hiervon.

4. Verfahren nach dem vorhergehenden Anspruch, wobei den Inhalten der Eingangselemente (EE) Eigenschaften, insbesondere Formatierungen, zugeordnet sind, wobei der Wandler (W) die Eigenschaften analysiert und
- für jede bekannte Eigenschaft zumindest einen Baustein (BS) aus der Liste von Bausteinen auswählt, die bekannte Eigenschaft durch den zumindest einen ausgewählten Baustein ersetzt, und bei Bedarf den ausgewählten Baustein basierend auf der bekannten Eigenschaft anpasst, und
- unbekannte Eigenschaften entfernt,
um die Datensegmente zu erzeugen.

5. Verfahren nach einem der vorhergehenden Ansprüche, wobei die Eingangselemente (EE) Tags und Inhalte umfassen, wobei der Wandler (W)
- eine Taganalyse durchführt, um die Tags und die Inhalte in den Eingangselementen (EE) zu ermitteln,
- für jeden ermittelten Tag zumindest einen zugehörigen Baustein (BS) aus der Liste von Bausteinen auswählt, und
- die ermittelten Inhalte und den zumindest einen ausgewählten Baustein zusammenfügt, um die Datensegmente zu erzeugen.

6. Verfahren nach einem der vorhergehenden Ansprüche, wobei der Wandler (W) in einer Speichereinrichtung, insbesondere in einem Arbeitsspeicher des Computersystems zumindest einen Zustandsspeicher (ZS) erzeugt, wobei einer Anzahl von Bausteinen (BS) in der Liste von Bausteinen eine erste Eigenschaft und eine zweite Eigenschaft zugeordnet ist, wobei
- die erste Eigenschaft angibt, ob es sich bei dem Baustein um ein Anfangstag oder um ein Endtag handelt, wobei ein Endtag einem Anfangstag zugeordnet ist, und
- die zweite Eigenschaft angibt, um welche Gliederungsebene es sich bei dem Baustein handelt, wobei die Gliederungsebene ausgewählt ist aus der Gruppe zumindest umfassend Dokument, Abschnitt, Seite, Absatz, und Zeichen,
wobei der Wandler beim Auswählen eines Bausteines (BS) aus der Liste von Bausteinen (BS) überprüft, ob es sich bei dem ausgewählten Baustein um ein Anfangstag oder um ein Endtag handelt, und
- wenn es sich um ein Anfangstag handelt, eine Information über das Anfangstag dem Zustandsspeicher (ZS) hinzufügt, und
- wenn es sich um ein Endtag handelt, die Information über das Anfangstag,
das dem Endtag zugeordnet ist, aus dem Zustandsspeicher (ZS) entfernt. wobei für jede Gliederungsebene vorzugsweise ein eigener Zustandsspeicher (ZS) erzeugt wird.

7. Verfahren nach einem der vorhergehenden Ansprüche, wobei die Eingangselemente (EE) von einer externen Quelle, insbesondere einem Editor und/oder einer Datenbank bereitgestellt werden und/oder wobei das Zielformat ein XML-basiertes Dateiformat, insbesondere OOXML umfasst.

8. Computer-implementiertes Verfahren zum Extrahieren von Inhalten aus einem elektronischen Dokument, wobei das Verfahren in einem Computersystem zur Ausführung gebracht wird und wobei
- das elektronische Dokuments als Eingangsdokument einem Extrahierer (EX) zugeführt wird, wobei das Eingangsdokument zumindest einen Marker (M) enthält und wobei der zumindest eine Marker Stellen in dem Eingangsdokument angibt, an denen sich die zu extrahierenden Daten befinden,
- der Extrahierer (EX) anhand der in dem Eingangsdokument enthaltenen Marker (M) zumindest ein Datensegment aus dem Eingangsdokument extrahiert,
- der Extrahierer (EX) die extrahierten Datensegmente einem Wandler (W) zuführt, wobei die Datensegmente jeweils die zu extrahierenden Inhalte und Bausteine (BS) umfassen, wobei die Datensegmente beim Erzeugen des elektronischen Dokuments in dieses eingefügt wurden,
- der Wandler (W) in den Datensegmenten die Bausteine entfernt und die in den Datensegmenten verbleibenden Inhalte für eine weitere Verarbeitung zur Verfügung stellt.

9. Verfahren nach dem vorhergehenden Anspruch, wobei das elektronische Dokument (DZ) mit einem Verfahren nach einem der vorhergehenden Ansprüche 1 bis 7 erzeugt wird.

10. Verfahren nach einem der beiden vorhergehenden Ansprüche, wobei die in den Datensegmenten verbleibenden Inhalte für eine weitere Verarbeitung einem Konverter (K) zur Verfügung gestellt werden, wobei der Konverter auf dem Computersystem ausgeführt wird und die zur Verfügung gestellten Inhalte gemäß einer vorbestimmten Verarbeitungsvorschrift verarbeitet, wobei die Verarbeitungsvorschrift vorzugsweise ausgewählt ist aus der Gruppe zumindest umfassend Erzeugen einer kommaseparierten Liste aus den Inhalten, Einfügen der Inhalte in eine Datenbank, Erzeugen eines elektronischen Dokuments gemäß dem Verfahren nach einem der Ansprüche 1 bis 7, wobei die Inhalte als Eingangselemente (EE) zur Verfügung gestellt werden, und Kombinationen hiervon.

11. Computer-implementiertes Verfahren zum Erzeugen eines elektronischen Dokuments (DZ) in einem vorbestimmten Zielformat aus einem elektronischen Dokument (DA) in einem vorbestimmten Ausgangsformat, wobei das elektronischen Dokument (DA) in dem Ausgangsformat mit einem Verfahren nach einem der Ansprüche 1 bis 9 erzeugt wird und zumindest einen ersten Marker (M) aufweist, wobei das Verfahren in einem Computersystem zur Ausführung gebracht wird und wobei
- das elektronische Dokument (DZ) in dem vorbestimmten Zielformat als Grundstruktur (GS) bereitgestellt wird,
- eine Liste von zweiten Bausteinen (BS) bereitgestellt wird, wobei ein zweiter Baustein zumindest eine Zeichenkette in dem vorbestimmten Zielformat umfasst,
- das elektronische Dokument (DA) in dem vorbestimmten Ausgangsformat als Eingangsdokument einem Extrahierer (EX) zugeführt wird, wobei der Extrahierer (EX) anhand der in dem Eingangsdokument enthaltenen ersten Marker (M) zumindest ein Datensegment aus dem Eingangsdokument extrahiert,
- der Extrahierer (EX) die extrahierten Datensegmente als Eingangselemente (EE) einem Wandler (W) zuführt, wobei die Datensegmente jeweils Inhalte und erste Bausteine (BS) umfassen, wobei die ersten Bausteine beim Erzeugen des elektronischen Dokuments (DA) in dem Ausgangsformat in dieses eingefügt wurden, wobei der Wandler für jedes Eingangselement
- eine Analyse durchführt und die Inhalte und die ersten Bausteine des Eingangselements ermittelt,
- basierend auf dem Ergebnis der Analyse eine Anzahl von zweiten Bausteinen (BS) aus der Liste von Bausteinen (BS) auswählt, und
- aus den ermittelten Inhalten und den ausgewählten zweiten Bausteinen zumindest ein Datensegment in dem vorbestimmten Zielformat erzeugt, und
- die in dem Zielformat erzeugten Datensegmente und die Grundstruktur (GS) einem Erzeuger (E) zugeführt werden, wobei der Erzeuger (E) diese Datensegmente an vorbestimmten Stellen in die Grundstruktur einfügt und als Ergebnis hiervon das elektronische Dokument (DZ) in dem vorbestimmten Zielformat bereitstellt.

12. Verfahren nach dem vorhergehenden Anspruch, wobei in der Grundstruktur (GS) zweite Marker (M) vorgesehen werden, wobei die zweiten Marker die vorbestimmten Stellen in der Grundstruktur angeben, an denen die Datensegmente von dem Erzeuger (E) einfügt werden, wobei die zweiten Marker nach dem Einfügen der Datensegmente in dem bereitgestellten elektronischen Dokument (DZ) in dem vorbestimmten Zielformat erhalten bleiben.

13. Verfahren nach einem der beiden vorhergehenden Ansprüche, wobei die Inhalte der Eingangselemente (EE) zumindest Daten umfassen, die ausgewählt sind aus der Gruppe umfassend Texte, Grafiken, Tabellen, einbettbare Objekte, und Kombinationen hiervon.

14. Verfahren nach einem der vorhergehenden Ansprüche 11 bis 13, wobei der Wandler (W)
- für jeden bekannten ersten Baustein des Eingangselements zumindest einen zweiten Baustein (BS) aus der Liste von Bausteinen auswählt, den bekannten ersten Baustein durch den zumindest einen ausgewählten zweiten Baustein ersetzt, und bei Bedarf den ausgewählten zweiten Baustein basierend auf Eigenschaften des bekannten ersten Bausteins anpasst, und
- unbekannte erste Bausteine des Eingangselements entfernt,
um die Datensegmente zu erzeugen,
und/oder
wobei der Wandler (W) in einer Speichereinrichtung, insbesondere in einem Arbeitsspeicher des Computersystems zumindest einen Zustandsspeicher (ZS) erzeugt, wobei einer Anzahl von zweiten Bausteinen (BS) in der Liste von Bausteinen eine erste Eigenschaft und eine zweite Eigenschaft zugeordnet ist, wobei
- die erste Eigenschaft angibt, ob es sich bei dem zweiten Baustein um ein Anfangstag oder um ein Endtag handelt, wobei ein Endtag einem Anfangstag zugeordnet ist, und
- die zweite Eigenschaft angibt, um welche Gliederungsebene es sich bei dem zweiten Baustein handelt, wobei die Gliederungsebene ausgewählt ist aus der Gruppe zumindest umfassend Dokument, Abschnitt, Seite, Absatz, und Zeichen,
wobei der Wandler (W) beim Auswählen des zweiten Bausteines (BS) aus der Liste von Bausteinen (BS) überprüft, ob es sich bei dem ausgewählten zweiten Baustein um ein Anfangstag oder um ein Endtag handelt, und
- wenn es sich um ein Anfangstag handelt, eine Information über das Anfangstag dem Zustandsspeicher (ZS) hinzufügt, und
- wenn es sich um ein Endtag handelt, die Information über das Anfangstag, das dem Endtag zugeordnet ist, aus dem Zustandsspeicher (ZS) entfernt.

15. Verfahren nach dem vorhergehenden Anspruch, wobei für jede Gliederungsebene ein eigener Zustandsspeicher (ZS) erzeugt wird.
